# EUROPEAN PATENT APPLICATION

(11) **EP 3 693 139 A1**
(43) Date of publication of application: **12.08.2020**
(21) Application number: 19305171.1
(22) Date of filing: 11.02.2019
(51) Int. Cl.: B25J 13/08, G01L 5/22, G01L 5/16, G01L 1/24, G06F 3/042

(54) **OPTICAL TACTILE SENSOR**

(71) Applicant: Université d'Aix-Marseille, 13284 Marseille Cedex 07 (FR); CENTRE NATIONAL DE LA RECHERCHE SCIENTIFIQUE, 75016 Paris (FR)
(72) Inventor: LIN, Xi, 13008 Marseille (FR); WIERTLEWSKI, Michael, 13008 Marseille (FR)
(74) Representative: Fonquernie, Sophie Benedicte

(57) **Abstract**

The invention relates to an optical tactile sensor (10) configured to determine the lateral and normal components of a force applied thereto, the optical tactile sensor comprising an outer layer (12) with a contact face (13) and an internal face (14), at least one white light source (18), an image sensor (19) and an elastic layer (15) between the image sensor and the outer layer. A plurality of arrays of colored markers is embedded in an elastic layer. According to the invention, at least one first array (16) being the closest arrays to the image sensor comprises partially transparent markers (161) and at least one second array (17) being one of the closest arrays to the outer layer comprises opaque markers (171).

## Description

### FIELD OF THE INVENTION

The present invention relates to a tactile sensor. A tactile sensor is particularly useful for sensing, grasping and/or manipulating an object and is based on the contact between the object and the sensor. More specifically, it relates to a tactile sensor that uses a camera for capturing the shape and slippage of the contact between the object and the sensor. Even more specifically, it relates to a camera-based tactile sensor, especially a camera-based robotic tactile sensor that uses the subtractive color mixing property to track the 3-dimensional spatial displacement of at least an array of markers due to the contact between the object and the sensor.

### BACKGROUND PRIOR ART

The sense of touch, proprioception and the maintenance of the balance uses multiple sensors across the body surfaces. For robot as well as for human, tactile perception by sensors is essential to obtain information about the shape and the texture of a contact surface. It is particularly essential to correctly execute hand gesture in order to grasp and manipulate an object. By executing such hand gesture, frictional and normal components of a force are applied from the object to a contact part of the hand which is a tactile part. The force applied from the object to a contact part corresponds to the sum of the stresses or forces distributed over the entire contact area, such stresses or forces comprising a normal and a lateral component. The normal force is defined as the force applied perpendicularly to the surface that an object contacts. The frictional component of a force is defined as the lateral component of a force, that is the force applied to a direction parallel to a surface that an object contacts. In particular, the perception of the state of contact between the hand, the finger for instance, and the object offers information on the lateral and normal components of the force applied, which is central to the stability of the grasp. Without the perception of the state of both the lateral and normal components of the force applied, it is difficult to precisely manipulate and position an object in the hand. Such manipulation involves therefore a fine and dexterous perception of the state of contact between the object and the hand.

A lot of tactile sensors, namely sensors adapted to detect the presence of an object and to measure a force resulting from contact, focus on determining the normal component of said force, which is enough for object recognition, and not the lateral component of said force. Yet, the lateral component of said force is recognized to be an important dimension to control robotic grippers. Moreover, such tactile sensors are limited by electrical interconnections and conditioning electronics which can lead to unwieldy and cumbersome designs, particularly when the number of transducers is large.

Some tactile sensors, and robot - in particular artificial fingertips - using such a sensor, use a camera to capture deformation of an elastic body of the sensor, due to a contact between an object and said elastic body. The measurements made with these devices are sufficiently rich to recognize the nature and orientation of an object in contact with the sensor but are often not directly connected to the normal and lateral components of the force applied between the object and the sensor. In particular the local friction coefficient, defined by the ratio of the lateral force to the normal force, is often not directly observable, despite being essential to characterize the adherence of an object with the tactile sensor and its stability in hand.

Therefore, camera-based (robotic) tactile sensors have been focusing on capturing the shape and slippage of the contact between an object and the sensor, depending on the lateral and normal components of a force. Many artificial fingertips are built with optical sensor, namely camera-based sensors, because cameras provide a fast and reliable way of transferring real-time data to a controller. Moreover, the need for electronic hardware, typically required in piezoresistive or capacitive sensor arrays is reduced.

Some artificial fingertips with an optical tactile sensor have been designed with a soft hemispheric membrane including markers whose displacements, when the sensor comes into contact with an object, are tracked using an image sensor. Depending on the membrane elasticity and shape, the forces applied at the surface of the sensor can be, for instance, determined by measuring the displacements of the markers tracked by the image sensor, and using for instance least-square methods to determine an approximated general vector of displacement of the markers. In some examples of such artificial fingertips, the tactile sensor is able to receive information related to a 2-dimensional displacement field of the markers which mixes the single or multiple lateral components of a force applied onto the surface of the sensor. Indeed, the lateral forces applied by an object on a tactile sensor vary depending on the shape and the movement of the said object when coming into contact with the sensor. However, these methods usually lack a quantitative measurement of the 3-dimensional deformation of the surface, in particular the deformation resulting from the normal component of the force applied onto the sensor, or offer insufficient spatial resolution. Such sensors are not able to determine both the lateral and the normal components of a force applied onto the sensors.

US Patent 7,707,001 B2 describes an optical tactile sensor comprising a tactile portion made of an optically transparent elastic body which includes a convex curved surface and has a marker portion disposed on the convex curved surface. The deformation of the tactile portion caused by a force applied to the sensor is determined analyzing the marker portion "behavior". The markers may be disposed only on the convex curved surface to facilitate the manufacture and/or may be disposed in a plurality of groves or ridges arranged in a grid pattern, in order to facilitate recognition of the deformation of the tactile portion. However, such optical tactile sensor cannot determine both the lateral and the normal components of a force applied onto the optical sensor.

US Patent 7,460,964 B2 describes an optical tactile sensor comprising a tactile portion made of a transparent elastic body and a plurality of groups of markers provided inside the elastic body. Each marker group is made up of a number of colored markers, with different colors for each group. At least one of displacement, strain and inclination of the colored markers when the elastic body contacts an object is observed by photographing the behavior of the colored markers. The shape of the object in contact with the optical tactile sensor is therefore calculated from strain information, and information about force acting on a contact interface between the object and the sensor is also detected. However, such optical tactile sensor cannot precisely determine both the normal and the lateral components of a force applied on a contact interface between the object and the sensor.

The problem with such optical tactile sensor is that a great number of markers of small size is desired. However, one of the consequences of having a great number of markers and therefore a high density of markers is that the individual markers occupy only few pixels which require using high resolution image sensors which are expensive. Therefore it could lead to undetectable localizations changes without high resolution image sensors. Moreover, the arrangement of the markers in different disposition between multiple layer levels may lead to visual occlusion between the markers when the elastic body of the tactile sensor is deformed. Such visual occlusion limits the number of markers that can be seen at the same time and therefore the precision of the system.

There is therefore a need for a tactile sensor to determine more precisely the lateral and normal components of a force applied onto a tactile portion of the sensor, without necessarily using a high resolution (and so expensive) image sensor.

### SUMMARY OF THE INVENTION

To this effect, the invention discloses a camera-based sensor that is able at once to quantify the lateral motion of multiple arrays of markers when the sensor enters into contact with an object and to quantify the motion normal to the surface of multiple arrays of markers. The sensor is based on a plurality of arrays of markers. An image sensor is able to receive the light emitted corresponding to the displacement of the markers.

The invention discloses an optical tactile sensor configured to determine lateral and normal components of a force applied thereto, the sensor comprising:
- an outer layer having a contact face adapted for contacting an object and an internal face adapted to scatter at least one white light beam;
- at least one white light source configured to emit at least one white light beam towards the internal face of the outer layer;
- an image sensor adapted to capture at least one light beam from the emitted at least one white light beam;
- an elastic layer positioned between the image sensor and the internal face of the outer layer, said elastic layer being optically transparent;
- a plurality of arrays of markers embedded in the elastic layer; and
wherein at least one first array being the closest array to the image sensor comprises partially transparent markers of at least a first color, and
wherein at least one second array being one of the closest arrays to the outer layer comprises opaque markers of at least a second color, and wherein the first and the second color are different.

In other words, the at least one first array lie between the image sensor and the at least one second array. Also, the at least one second array lie between the outer layer and the at least one first array.

The said at least one white light source is configured to emit at least one white light beam comprising light rays which may be scattered by the said internal face of the outer layer or by the at least one second array being closest to the outer layer and comprising opaque markers. After being scattered, the light rays may or may not pass through the at least one first array being the closest array to the image sensor and comprising partially transparent markers. After passing or not through the said partially transparent markers, the light rays are captured by the said image sensor.

The invention defines an optical tactile sensor which comprises an outer layer with a contact face, being the face visible from the outside of the tactile sensor and an internal face, being the face from the inside of the tactile sensor. The outer layer of the tactile sensor separates the inside and the outside of the sensor. The inside of the sensor encompasses the image sensor, the at least one light source, the elastic layer and the at least one first and second array. The outside of the tactile sensor refers to the space on the side of the outer layer which is opposite to the inside of the sensor. The image sensor and the light source are encompassed in the inside of the tactile sensor and face the internal face of the outer layer.

The optical tactile sensor allows determining the normal component of a force applied onto the said optical tactile sensor by measuring the at least one hue and their frequency captured by the image sensor without requiring a great number of markers. The optical tactile sensor also allows determining the lateral component of the said force applied onto the said optical tactile sensor by measuring the relative displacements between the markers of the at least one first array and the markers of the at least one second array which is captured by the image sensor. The frequency of a hue corresponds to the frequency of occurrence of a hue captured by the image sensor. The proportion of the hues captured by the image sensor may be used instead of the frequencies of hues. Such proportion corresponds to the relative frequencies between the hues captured by the image sensor. The frequency of each hue captured by the image sensor is fed to a model which outputs a 3D displacement of the marker from which is inferred the force applied onto the sensor. When the displacement of a marker is purely lateral, that is resulting from a force which comprises a lateral component which is not void and a normal component which is void, the model outputs a normal force which does not change.

Optically transparent refers to the property for the elastic layer of allowing light to pass through such elastic layer without being scattered. Partially transparent markers refer to markers made of materials which allow a part of the light to pass through such markers. Partially transparent markers may refer to band-pass filter but may also refer to neutral density filter or a filter with particular transmittance.

Scattering refers to diffuse reflection. The internal face of the outer layer of the optical tactile sensor may allow diffuse reflection of the light emitted by the light source. The internal face of the outer layer may also allow specular reflection. Opaque markers may refer to markers which are able to scatter or reflect the light emitted by the at least one light source and simultaneously to absorb at least a part of the spectrum of the light emitted by the at least one light source. The opaque markers may also allow specular reflection.

The markers of the optical tactile sensor are colored markers. The colored markers are as such to absorb a part of the light emitted by the light source and to reemit the part of the light emitted by the light source which has not been absorbed. In particular, the hue frequency resulting from the superposition of the markers and captured by the image sensor allows determining the normal component of the force applied onto the optical tactile sensor. In a state of rest of the tactile sensor, the image sensor is able to capture at least one white light beam corresponding to the superposition of the arrays of marker. Such superposition of the arrays of markers allows determining the frequency of different hues. These different hues correspond to the hue of the partially transparent markers, the hue of the opaque markers and the hue of the combined colors of the markers. When a force is applied onto the tactile sensor the hue frequencies are modified. The tactile sensor allows determining an increase of the normal component of the force by comparing the current hue frequencies to the hue frequencies when in a state of rest.

Advantageously, the optical tactile sensor comprises a plurality of arrays of markers which is arranged in layers substantially parallel to the outer layer.

Favorably, the optical tactile sensor comprises markers of the at least one second array which are stretchable markers.

Therefore, when a force is applied, the image obtained by the image sensor will allow identifying displacement and deformation of the opaque markers relatively to the partially transparent markers. The displacement and deformation of the opaque markers indicate that the opaque markers are stretched according to a specific orientation depending on the stretching sides and a specific force depending on the importance of such stretching. The lateral component of the force can be determined by measuring the relative displacements between the markers of the at least one first array of markers and the at least one second array of markers. In particular, measuring the displacement of the centroid of the markers allows determining more precisely the lateral component of the force.

In a particular embodiment of the optical tactile sensor, the markers of each array are of the same size but with different sizes between the different arrays. The markers of the array of markers which is the closest to the image sensor may be smaller than the markers of the array of markers which is the furthest to the image sensor.

Advantageously, the elastic layer comprises a silicone-based elastomer.

Even more advantageously, the partially transparent colored markers correspond to a lowpass filter having a cutoff wavelength, preferably larger than 500 nm, which is captured by regular color cameras.

Advantageously, the internal face of the outer layer is white. In particular, the internal face of the outer layer is adapted to block the light from the outside of the marker and to reflect the light from the inside of the marker towards the image sensor.

The at least one first array may comprise partially transparent markers being of a first color, and the at least one second array may comprise opaque markers being of a second color, the first and the second color being different and preferably adapted for resulting in a third color different from the first and the second color when mixed according to the subtractive color system.

Favorably, the at least one first array comprises partially transparent markers which color is yellow, magenta or cyan, and the at least one second array comprises opaque markers which color is another one among yellow, magenta and cyan color.

Even more advantageously, the colored markers of the plurality of arrays in the optical tactile sensor are superposed orthogonally to the surface tangent of the contact face of the outer layer.

Preferably, the optical tactile sensor comprises an image sensor adapted to measure the hue frequencies of markers and/or superposed markers.

The optical tactile sensor may comprise a support member being transparent, which may be rigid and which preferably comprises an acrylic substrate.

The support member is a backing which supports the elastic layer. It may be bonded to the elastic layer and may be rigid. The support member is transparent, allowing the light to pass without being scattered. The support member allows the white light source to emit a light through the support member towards the internal face of the outer layer and also allows the light scattered by the internal face of the outer layer or/and by an opaque marker to pass again through the support member so as to be received by the image sensor. For instance, the support member may be composed of an acrylic substrate or borosilicate.

The outer layer of the optical tactile sensor corresponds to the part of the optical tactile sensor which is expected to enter in contact with an object. Such contact with an object will result in a force applied onto the optical tactile sensor, the force comprising normal and lateral components. The outer layer is soft and allows an object getting in contact to deform the outer layer according to the shape of the object.

The outer layer comprises a contact face which is adapted for contacting an object. The outer layer also comprises an internal face which is adapted to scatter the light by diffuse reflection. The internal face of the outer layer may comprise a white compound which allows blocking light from the outside of the optical tactile sensor while at the same time scattering the light from the light sources of the optical tactile sensor. The contact and internal faces of the outer layer may comprise the same compound and form a unique outer layer adapted for contacting an object and scattering the light emitted by the light sources of the optical tactile sensor. For instance, the outer layer may be composed of an elastomeric material, silicone, polydimethylsiloxane.

The elastic layer of the optical tactile sensor is positioned between the image sensor and the internal face of the outer layer of contact. Preferably, the internal face of the outer layer and the elastic layer may be contiguous and bonded to each other on a first side of the elastic layer.

In an embodiment comprising a support member, the support member and the elastic layer may be contiguous and bonded to each other on a second side of the elastic layer which is opposite to the first side.

The elastic layer comprises an optically transparent body which allows the light to pass through without being scattered and which is deformable. The transparency of the elastic layer allows the image sensor to receive a light which was emitted by the light source, which passed through the elastic layer, which got scattered by the internal face of the outer layer or/and by an opaque marker and which passed again through the elastic layer to the image sensor. The light received by the image sensor may have passed through at least one partially transparent marker. The elastic layer may be composed of an elastomeric material or a soft silicone body.

A plurality of arrays of markers is embedded in the elastic layer. Each array is arranged in layers which may be substantially parallel to the support member. An array of markers may refer to multiple markers being disposed into a layer according to a particular layout in the elastic layer. The markers of each array may have different shapes and different compositions. For instance, the markers may be flat and rectangular. In a preferred embodiment, the markers are spherical. Preferably, the arrays have a marker distribution which is the same in the different layers. Also preferably, the arrays are arranged in layers with markers in a particular disposition so as to ensure that markers of different arrays are superposed. A preferable disposition comprises markers of different arrays being superposed orthogonally to the surface tangent of the contact face of the outer layer. The markers may comprise an elastomeric material or a soft silicone body.

The optical tactile sensor comprises at least one first array of markers being a closest array to the image sensor and which comprises partially transparent markers.

The optical tactile sensor comprises at least one second array of markers being a closest array to the outer layer and which comprises opaque markers. For instance, the opaque markers may be markers which reflect magenta light.

The optical tactile sensor comprises a light source which is configured to emit at least one white light beam towards the internal face of the outer layer. The light source allows emitting at least one white light beam towards the internal face of the outer layer, and said emitted light beam is scattered by the internal face of the outer layer or/and by an opaque marker. The light source may comprise multiple sources for emitting white light beam. Preferably, the light source comprises LEDs.

The optical tactile sensor comprises an image sensor adapted to capture at least one light beam. The image sensor allows determining the displacement of the markers and the hue frequencies resulting from at least one light beam which has passed through none, one or a plurality of markers. Such determination allows determining lateral and normal components of said force applied on the outer layer of the optical tactile sensor. The displacement of the markers between a rest state of the tactile sensor, namely a state wherein no force is applied onto the tactile sensor, and a state of the tactile sensor wherein a force is applied onto the sensor corresponds to the lateral component of the force. The modification of the hue frequencies between a rest state of the tactile sensor and a state of the tactile sensor wherein a force is applied onto the sensor corresponds to the normal component of the force. The image sensor is placed so as to be able to receive at least one light beam among the reemitted light beam from the internal face of the outer layer or from the reemitted light beam from the opaque markers or the transformed light beam after having passed through at least one partially transparent marker. The transformed light beam corresponds to the light having passed through the partially transparent markers and which may originate from the reemitted light from the internal face of the outer layer or the opaque markers. For instance, the image sensor may be a regular camera, a color sensor, a photodiode, a photo camera, a CCD sensor or a CMOS sensor.

When a force is applied onto the optical tactile sensor, the normal component of the force on the outer layer compresses the elastic layer and at least some of the markers of the plurality of array are closer to each other. The lateral component of the force applied onto the optical tactile sensor also shifts each marker relative to one another. The light beam(s) captured by the image sensor results therefore from the different combinations of color spectrum. When a first light beam emitted by the light source passes through the elastic layer and has been scattered by the internal face of the outer layer (and through the support member if there is one), without passing through a partially transparent marker and without being scattered by an opaque marker, therefore said first light beam received by the image sensor will be of a first color which is white. When a second light beam emitted by the light source passes through the elastic layer and has been scattered by the internal face of the outer layer (and through the support member if there is one), and has passed through a partially transparent marker and without being scattered by an opaque marker, therefore said second light beam received by the image sensor will be of a second color corresponding to the color of the partially transparent marker. When a third light beam emitted by the light source passes through the elastic layer and has been scattered by the opaque markers (and through the support member if there is one), and without passing through a partially transparent marker, therefore said third light beam received by the image sensor will be of a third color corresponding to the color of the opaque marker. When a fourth light beam emitted by the light source passes through the elastic layer and has been scattered by the opaque markers (and through the support member if there is one), and has passed through a partially transparent marker, therefore said fourth light beam received by the image sensor will be of a fourth color. For instance, in a particular embodiment comprising two layers of arrays of markers being an array of opaque magenta markers closest to the internal face of the outer layer and an array of partially transparent yellow markers closest to the image sensor, four different lights and hue may be received by the image sensor. In such embodiment, a first light beam is received as white by the image sensor when an emitted white light beam has been scattered by the internal face of the outer layer and did not pass through the partially transparent yellow marker. Also, a second light beam is received as yellow by the image sensor when an emitted white light has not been scattered by the magenta opaque marker but passed through the partially transparent yellow marker. A third light beam is received by the image sensor as magenta when an emitted white light has been scattered by the magenta opaque marker but has not passed through the partially transparent yellow marker. A fourth light beam is received by the image sensor as red when an emitted white light has been scattered by the magenta opaque marker and has passed through the partially transparent yellow marker.

The optical tactile sensor uses the subtractive color mixing property to track the 3-dimensional spatial displacement of an array of markers. The at least one light beam received by the image sensor allows obtaining an image captured in the Red-Green-Blue color space and can be converted in Hue-Saturation-Value color space, in which each light spectrum corresponds to a specific value of hue which allows determining the corresponding normal component of the force applied onto the optical tactile sensor by comparing the hue frequencies between a rest state and a state wherein a force is applied onto the optical tactile sensor.

Multiple combinations of colors of the markers among the plurality of arrays of markers are available. The color of the opaque markers and the partially transparent markers may be chosen according to the image sensor abilities. Preferably, the colors of the markers may be chosen according to the difference of hue between the different light beams captured by the image sensor when being scattered or not by a colored opaque marker and/or passing by a partially transparent colored marker. The combination of colors of the markers must be determined so as to have the spectrum of the light scattered by the opaque marker be partially filtered by the partially transparent marker and captured by the image sensor. In a particular embodiment, the opaque marker may be cyan and the partially transparent marker may be yellow or inversely. In another particular embodiment, the opaque marker may be cyan and the partially transparent marker may be magenta or inversely.

The modification of the hue frequencies of the resulting image from at least two superposed markers between a state of rest and a state wherein a force is applied onto the sensor is more noticeable than the modification of the marker size, leading to a better sensitivity to the normal component of the force. The tactile sensor encodes the normal component of the force via hue frequencies variation, which is robust even using a handful of pixels.

The superposed markers may create different blends of colors, hues, according to the lateral and normal displacement at the surface. The hue frequencies captured by the image sensor for each marker can be implemented on an embedded system.

Another advantage of the optical tactile sensor of the invention is that it is low-cost. The materials which can be used for the support member, the outer layer, the elastic layer and the markers are not expensive. Moreover, the camera and light sources of the sensor are largely available and may not be expensive.

The at least one second array being the closest arrays to the outer layer is preferably as closely as possible to the outer layer. The more the closest arrays to the outer layer is closed to the outer layer, the more the at least one second array will be deformed in the same manner as the outer layer when a force is applied on the tactile sensor. The distance between the at least one second array being the closest arrays to the outer layer may be below 0.5 mm. The at least one second array being the closest arrays to the outer layer may be contiguous with the outer layer.

In order to be meaningful, the tactile sensor should be able to capture undulations of the surface that are at least 10 times smaller than the size of the tactile sensor.

### BRIEF DESCRIPTION OF THE DRAWINGS

The invention will be better understood and its various characteristics and advantages will emerge from the following description of a number of exemplary embodiments and its appended figures in which:
- Figure 1 displays a first embodiment of an optical tactile sensor comprising an outer layer, an elastic layer, two arrays of markers, two light sources and an image sensor;
- Figure 2A displays the first embodiment of an optical tactile sensor comprising two arrays of markers each comprising one marker in a state wherein no force is applied onto the optical tactile sensor;
- Figure 2B displays the first embodiment of an optical tactile sensor comprising two arrays of markers each comprising one marker in a state wherein a force is applied onto the optical tactile sensor;
- Figure 3A to 3D displays the positions of two superposed markers of an optical tactile sensor as seen from the inside of the optical tactile sensor wherein different forces are applied onto the optical tactile sensor;
- Figure 4 displays 3 light rays passing by one or two superposed markers of an optical tactile sensor according to the invention and the resulting wavelength and hue of the 3 light rays received by the image sensor;
- Figure 5A displays two arrays of superposed markers according to a second embodiment of the invention and according to a force applied by a flat square onto the optical tactile sensor;
- Figure 5B displays an area comprising two superposed markers of the two arrays of superposed markers according to a second embodiment of the invention and according to a force applied by a flat square onto the optical tactile sensor.
- Figure 6A displays two markers according to an embodiment of the invention comprising a partially transparent marker and an opaque marker;
- Figure 6B to D displays the hue frequency of the light received by the image sensor according to different states of an embodiment of the invention comprising a partially transparent marker and an opaque marker;
- Figure 7 displays an embodiment of the optical tactile sensor comprising a support member.

### DETAILED DESCRIPTION OF THE INVENTION

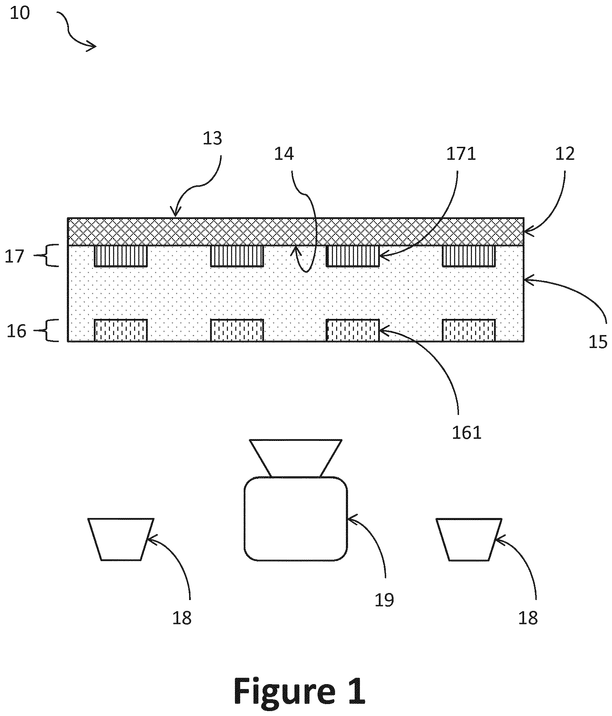

Figure 1 describes a first embodiment of the optical tactile sensor 10 configured to determine lateral and normal components of a force applied thereto, the sensor comprising:
- an outer layer 12 having a contact face 13 adapted for contacting an object and an internal face 14 adapted to scatter a light beam;
- two white light sources 18 configured to emit at least one light beam towards the internal face of the outer layer;
- an image sensor 19 facing the internal face 14 and adapted to capture at least one light beam from the emitted at least one white light beam ;
- an elastic layer 15 positioned between the image sensor 19 and the internal face 14 of the outer layer 12, said elastic layer being optically transparent;
- a first array 16 of markers embedded in the elastic layer 15 comprising partially transparent markers 161;
- a second array 17 of markers embedded in the elastic layer 15 comprising opaque markers 171 which are contiguous with the internal face 14;

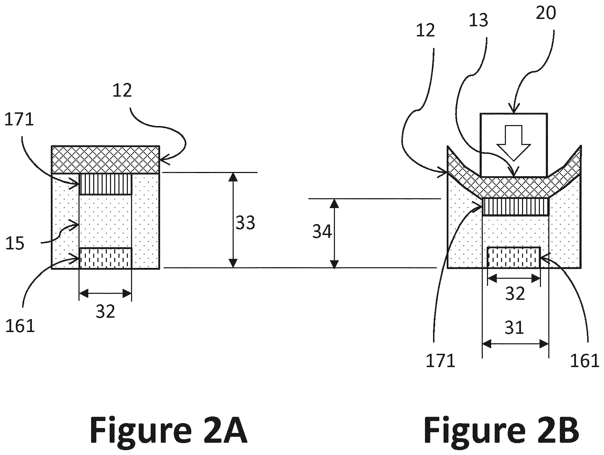

Figure 2A describes a second embodiment of an optical tactile sensor comprising two arrays 16, 17 of markers each comprising one marker 161, 171 in a state wherein no force is applied onto the optical tactile sensor.

Figure 2B describes an embodiment of an optical tactile sensor comprising a first and a second arrays 16, 17 of markers 161, 171, the second array 17 comprising a second marker 171 in a state wherein a force is applied onto the contact face 13 of the optical sensor. The outer layer 12 is deformed in response to the shape of the object 20 which applies a force on the outer layer 12. Also, according to the embodiment of figure 2B the marker 171 of the second array is deformed, being thinner and larger.

Alternately, the second marker may not be stretchable and remains of the same size when a force is applied or not on the outer layer 12.

Figure 2A and 2B exposes the difference of size between the second marker 171 when the tactile sensor is in a rest state and when a force is applied onto the tactile sensor. The first marker 161 is not deformed in response to the force applied onto the contact face 13 of the tactile sensor by the object 20. The width 32 corresponds to the width of the first and second non deformed markers 161, 171 while the width 31 corresponds to the width of the second deformed marker 171. The width 31 is larger than the width 32, which indicates that the second marker 171 is deformed and is larger than the first marker 161. Also, the deformed second marker 171 is thinner. The height difference 33 between the first marker 161 and the second marker 171 corresponds to the height difference when no force is applied onto the outer layer 12. The height difference 34 between the first marker 161 and the second marker 171 corresponds to the height difference when a force 20 is applied onto the outer layer 12 of the tactile sensor. The height 34 is smaller than the height 33, which indicates that the first marker 161 and the second marker 171 are closer when a force 20 is applied onto the tactile sensor. When a force 20 is applied onto the contact face 13 of the outer layer 12, the second marker 171 is closer to the first than when no force is applied onto the tactile sensor. An image sensor facing the internal face of the outer layer 12 is able to capture different light beams emitted by the white light sources when a force 20 is applied onto the outer layer of the tactile sensor and when a force is not applied onto the outer layer of the tactile sensor. The different lights beams captured, depending on a force being applied or not on the outer layer of the tactile sensor, correspond to different hue frequencies which allows determining the normal component of the force 20 applied onto the outer layer 12 of the tactile sensor.

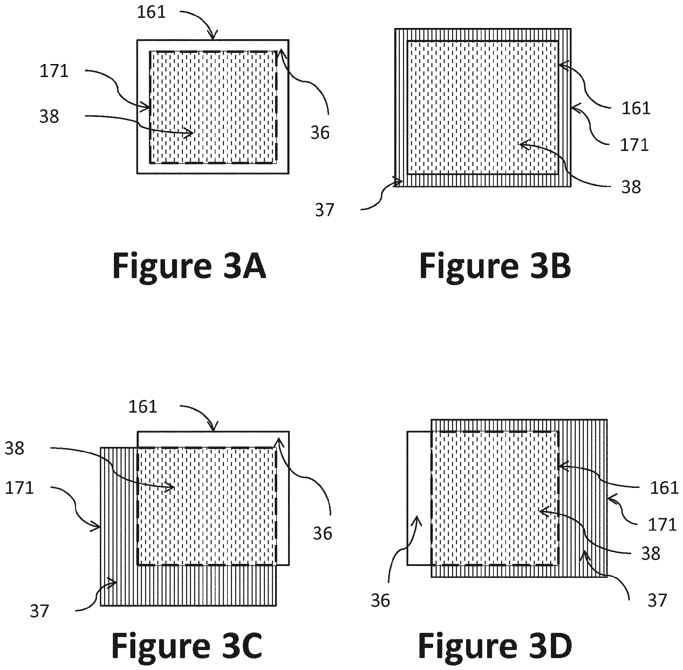

Figure 3A to 3D describes different positions of two superposed markers according to the invention and seen from the inside of the optical tactile sensor, wherein a first marker 161 of a first array is placed in front of a second marker 171 of a second array being one of the closest arrays to the outer layer.

Figure 3A exposes a state wherein no lateral or normal force is applied on the outer layer of the optical tactile sensor. In Figure 3A, the second marker 171 can be indirectly seen due to the first marker 161 being partially transparent. The second marker 171 does not overrun on the sides of the first marker 161 when seen from the inside of the tactile sensor, where the image sensor is placed. Area 36 represents an area wherein only the partially transparent first marker 161 is seen from a point where the image sensor is placed. According to the invention, a light ray reflected by the internal face 14 of the outer layer 12 and passing through the area 36 of the first marker 161 would be received by the image sensor with a hue corresponding to the color of the partially transparent first marker 161. The hue of the area 36 corresponds to the hue of the partially transparent marker 161 only. The hue of the area 38 corresponds to the hue resulting from the opaque second marker 171 seen through the partially transparent first marker 161.

Figure 3B represents a state wherein a normal force is applied on the outer layer of the optical tactile sensor to a point wherein the second marker 171 of the at least second array being one of the closest arrays to the outer layer is stretched and is larger than the first marker 161 and can be seen from a point where is placed the image sensor both directly and indirectly behind the partially transparent first marker 161. Area 37 represents an area wherein only the opaque second marker 171 can be seen from a point where is placed the image sensor. The area 37 is visible at the periphery of the partially transparent first marker 161 and indicates that the opaque second marker 171 is stretched to a greater size than the size of the partially transparent first marker 161. Such a pattern indicates that the force applied on the outer layer 12 is substantially normal and the lateral force is substantially void.

Figure 3C represents a state wherein at least a lateral force is applied on the outer layer of the optical tactile sensor to a point wherein the second marker 171 of the at least second array being one of the closest arrays to the outer layer 12 is stretched and displaced. Such displaced and stretched second marker 171 can be seen directly by the area 37 from a point where is placed the image sensor.

Figure 3D represents another state wherein at least a lateral force is applied on the outer layer of the optical tactile sensor to a point wherein the second marker 171 of the at least second array being one of the closest arrays to the outer layer is deformed and displaced. Such displaced and deformed second marker 171 can be seen directly by the area 37 from a point where is placed the image sensor. Also, an area 36 of the partially transparent first marker 161 is directly visible without the second marker 171 behind.

The number of light rays which are reflected by the opaque second marker 171 and are captured by the image sensor 19, having passed or not through the partially transparent first marker 161, is greater when the opaque second marker 171 is closer to the image sensor and also when the opaque second marker 171 is stretched to a greater width. The modification of the hue frequencies captured for a small displacement is more noticeable than the apparent change of the marker size, leading to a better sensitivity to the normal force applied onto the outer layer of the tactile sensor.

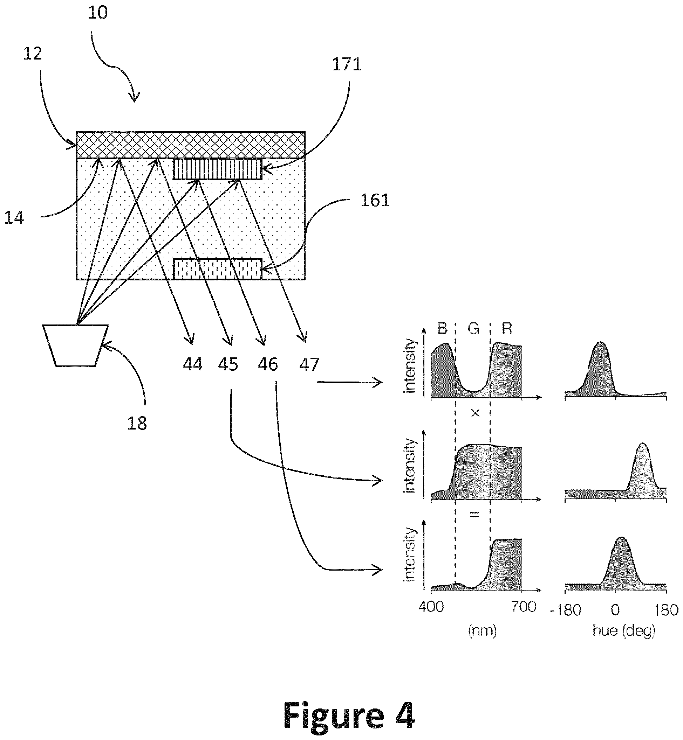

Figure 4 describes a particular embodiment 10 of the optical tactile sensor. Such embodiment comprises two markers 161, 171 superposed according to the invention and 4 light rays 44, 45, 46, 47 emitted by a light source 18 which are reflected by the opaque second marker 171 or the internal face 14 of the outer layer 12, and which passed or not through the partially transparent marker 116. Figure 4 illustrates the resulting wavelength and hue of the 4 light rays 44, 45, 46 and 47 as received by the image sensor 19. B, G and R correspond respectively to Blue, Green and Red. In such embodiment, the second marker 171 is an opaque magenta marker and the first marker 161 is a band-pass filter marker having a cutoff wavelength larger than 500 nm.

The light ray 44 originates from a white light beam emitted from a white light source 18, scattered by the internal face 14 of the outer layer 12 of the optical tactile sensor and which has not passed through the partially transparent first marker 161. The light ray 44 therefore is of a white color.

The light ray 45 originates from a white light beam emitted from a white light source 18, scattered by the internal face 14 of the outer layer 12 of the optical tactile sensor and which passed through the partially transparent first marker 161. The light ray 45 therefore comprises only wavelengths larger than 500 nm which corresponds to a yellow hue.

The light ray 46 originates from a white light beam emitted from a light source 18, scattered by the opaque magenta second marker 171 and which passed through the partially transparent first marker 161. The light ray 46 therefore comprises only wavelength reflected by the opaque magenta second marker 171 and the wavelength larger than 500 nm allowed by the partially transparent marker first 161. The light ray 46 therefore corresponds to a red hue.

The light ray 47 originates from a white light beam emitted from a light source 18, scattered by the opaque magenta second marker 171 and which did not pass through the partially transparent first marker 161. The light ray 47 therefore comprises only wavelength reflected by the opaque magenta second marker 171. The light ray 47 therefore corresponds to a magenta hue.

The color choice of the embodiment described in figure 4 is not limitative. Other color combinations are available based on the subtractive color system. The image sensor 19 may be adapted to capture only particular hue according to the combinations of colors chosen for the first and second markers 161, 171.

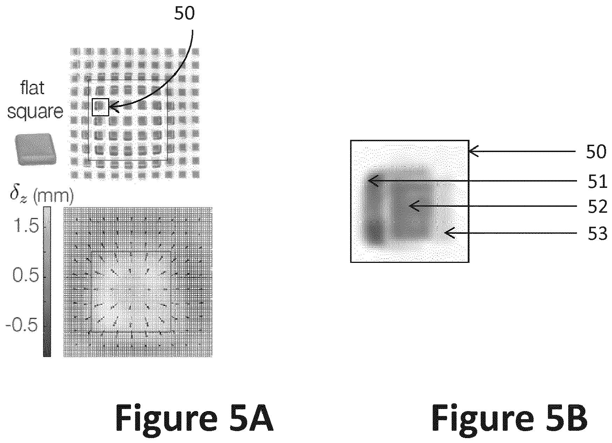

Figures 5A illustrates two arrays of superposed markers according to a second embodiment of the invention and according to a force applied by objects of different shapes onto the tactile sensor. The area 50 corresponds to an area of the two arrays of superposed markers which comprises two superposed markers. Such area can be clearly seen in figure 5B. The superposed markers are seen from a point where an image sensor would be placed according to the invention. Figures 5A illustrates the direction of the vector deformation according to the different shapes applying a force onto the optical tactile sensor.

Figure 5A illustrates the displacements of the markers when a flat squared object applies a force on the two arrays of superposed markers. The overrunning of the opaque second markers can be seen where the hue of the markers corresponds to the hue 51 of the opaque second markers. On the contrary, where the hue 53 of the partially transparent first markers can be seen, it demonstrates the displacement of the opaque second markers which is not placed behind the partially transparent first marker. The area corresponding to the superposition of the two markers corresponds to the area of a hue 52 and depends on both the normal and the lateral components of the force applied onto the optical tactile sensor.

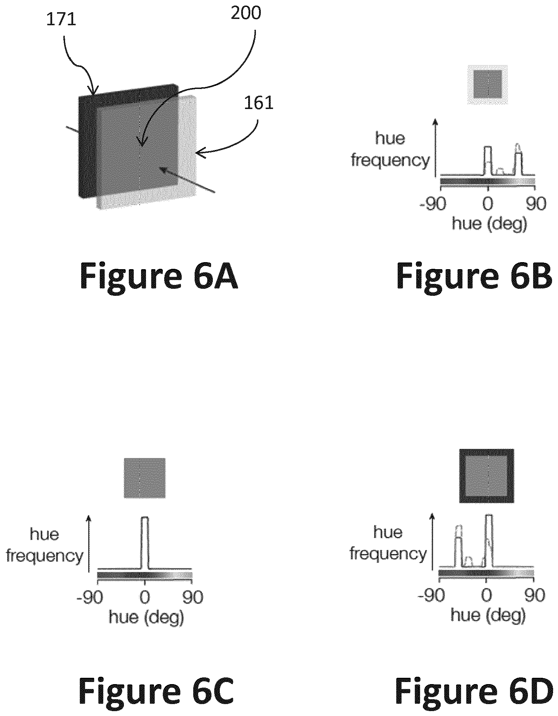

Figure 6A to 6D illustrate two superposed markers according to a second embodiment of the invention and wherein an opaque magenta second marker 171 is placed in front of a partially transparent yellow first marker 161, resulting in a red hue 200 which can be seen from a point wherein would be placed the image sensor when the white light beam emitted by the light sources is reflected by the opaque magenta second marker 171 and pass through the partially transparent yellow first marker 161.

Figures 6B to 6D illustrate the hue frequencies of the light beams captured by the image sensor according to different states of the tactile sensor of a second embodiment of the invention which is illustrated at figure 6A. Figures 6B to 6D illustrate first and second markers 161, 171 by one square or two superposed squares and their respective hue frequencies histograms captured by the image sensor.

In figure 6B, the hue frequencies histogram demonstrates two peaks at approximately 0 and 60 hue degree. Such state may correspond to a state wherein the normal and lateral forces applied on an optical tactile sensor of the invention are substantially void.

In figure 6C, the hue frequencies histogram demonstrates one peak at approximately 0 degree. Such state may correspond to a state wherein a normal force is applied on an optical tactile sensor of the invention with a lateral force which is void.

In figure 6D, the hue frequencies histogram demonstrates two peaks at approximately -60 and 0 degree. Such state may correspond to a state wherein a normal force is applied on an optical tactile sensor of the invention with a normal force important enough for the opaque magenta marker 171 to overrun the partially transparent yellow marker 161.

In figure 6B to 6C is illustrated the hue frequencies captured by the image sensor at different state of a normal force applied onto the tactile sensor. Such hue frequencies correspond to the size of the opaque magenta marker 171 and/or the distance between the partially transparent yellow marker. A histogram such as figure 6D histogram demonstrates that a normal force has been applied and is sufficient to deform the opaque magenta marker 171 to a sufficient size and/or to narrow the gap between the first and second markers 161, 171 so as to have the second marker 171 overrunning each sides of the partially transparent yellow marker 161.

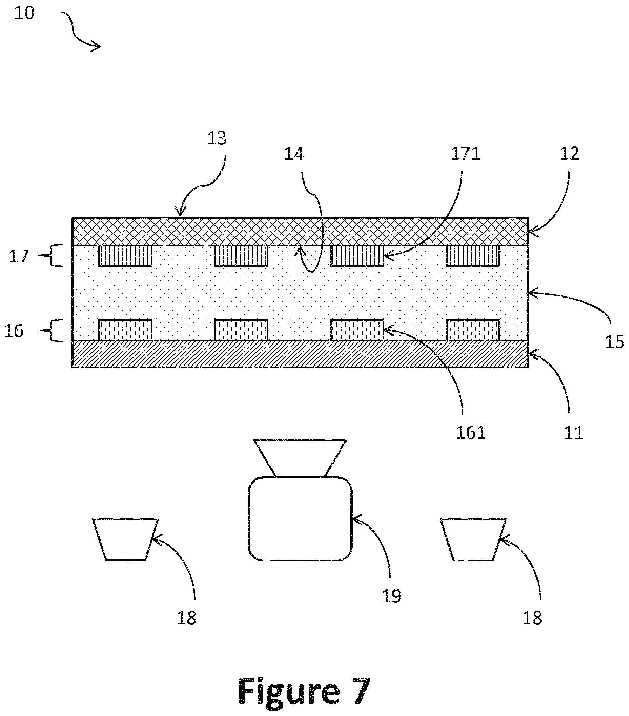

Figure 7 illustrates a third embodiment of the invention wherein the tactile sensor 10 comprises a support member. The support member supports the elastic layer and may be bonded to the elastic layer. It may be rigid. The support member is transparent, allowing the light to pass without being scattered. The support member allows the white light source to emit a light beam through the support member towards the internal face of the outer layer and also allows the light scattered by the internal face of the outer layer or/and by an opaque marker to pass again through the support member so as to be received by the image sensor. For instance, the support member may be composed of an acrylic substrate or borosilicate.

## Claims

1. An optical tactile sensor (10) configured to determine lateral and normal components of a force applied thereto, the sensor comprising:
- an outer layer (12) having a contact face (13) adapted for contacting an object and an internal face (14) adapted to scatter at least one white light beam;
- at least one white light source (18) configured to emit at least one white light beam towards the internal face of the outer layer;
- an image sensor (19) adapted to capture at least one light beam from the emitted at least one white light beam;
- an elastic layer (15) positioned between the image sensor (19) and the internal face (14) of the outer layer (12), said elastic layer being optically transparent;
- a plurality of arrays (16, 17) of markers (161, 171) embedded in the elastic layer (15); and
wherein at least one first array (16) being the closest array to the image sensor (19) comprises partially transparent markers (161) of at least a first color, and
wherein at least one second array (17) being one of the closest arrays to the outer layer (12) comprises opaque markers (171) of at least a second color and
wherein the first and the second color are different.

2. An optical tactile sensor (10) as claimed in claim 1 wherein the plurality of arrays (16, 17) of markers (161, 171) is arranged in layers substantially parallel to the outer layer (12).

3. An optical tactile sensor (10) as claimed in one of the previous claims wherein the markers (161, 171) of the at least one second array (17) comprises stretchable markers.

4. An optical tactile sensor (10) as claimed in one of the previous claims wherein the elastic layer (15) comprises a silicone-based elastomer.

5. An optical tactile sensor (10) as claimed in one of the previous claims wherein the partially transparent colored markers (161) corresponds to a lowpass filter having a cutoff wavelength, preferably larger than 500 nm.

6. An optical tactile sensor (10) as claimed in one of the previous claims wherein the internal face (14) of the outer layer (12) is white.

7. An optical tactile sensor (10) as claimed in one of the previous claims wherein the at least one first array comprises partially transparent markers which color is yellow, magenta or cyan, and wherein the at least one second array comprises opaque markers which color is another one among yellow, magenta and cyan color.

8. An optical tactile sensor (10) as claimed in one of the previous claims comprising an image sensor (19) adapted to capture the hue frequencies of markers and/or superposed markers (161, 171).

9. An optical tactile sensor (10) as claimed in one of the previous claims comprising a support member (11) being transparent.

10. An optical tactile sensor (10) as claimed in claim 9, wherein the support member (11) is rigid.

11. An optical tactile sensor (10) as claimed in claims 9 or 10, wherein the support member (11) comprises an acrylic substrate.

12. A method for determining the lateral and normal component of a force applied onto an optical tactile sensor according to one of the previous claims, the method comprising:
- Determining hue frequencies in a first state of rest of the optical tactile sensor using the captured light beam by the image sensor (19);
- Determining positions of the markers of the at least one first array of markers and positions of the markers of the at least one second array of markers in a first state of rest of the optical tactile sensor using the captured light beam by the image sensor (19);
- Determining the hue frequencies in a second state wherein a force is applied onto the optical tactile sensor using the captured light beams by the image sensor (19);
- Determining positions of the markers of the at least one first array of markers and positions of the markers of the at least one second array of markers in a second state wherein a force is applied onto the optical tactile sensor using the captured light beams by the image sensor (19);
- Comparing the hue frequencies and the positions determined in a first state of rest to the hue frequencies and the positions determined in a second state wherein a force is applied onto the optical tactile sensor;
- Determining a normal component of the force applied onto the optical tactile sensor from the compared hue frequencies in a first and a second state; and
- Determining a lateral component of the force applied onto the optical tactile sensor from the compared positions in a first and a second state.

13. The method of claim 12, wherein determining positions of the markers of the at least one first array of markers and positions of the markers of the at least one second array of markers comprises determining the positions of the markers centroids.
